# EUROPEAN PATENT APPLICATION

(11) **EP 4 636 105 A1**
(43) Date of publication of application: **22.10.2025**
(21) Application number: 23903344.2
(22) Date of filing: 04.12.2023
(51) Int. Cl.: C22B 59/00, C22B 3/18, C22B 3/22

(54) **RARE EARTH ELEMENT RECOVERY METHOD**

(30) Priority: 14.12.2022 JP 2022199694
(71) Applicant: Toyo Engineering Corporation, Chiba-shi, Chiba 261-8601 (JP); University Public Corporation Osaka, Osaka-shi, Osaka 5360025 (JP)
(72) Inventor: ISHISAKA, Takuya, Chiba-shi, Chiba 261-8601 (JP); TANAKA, Hiroshi, Chiba-shi, Chiba 261-8601 (JP); MINAMI, Takaya, Chiba-shi, Chiba 261-8601 (JP); KONISHI, Yasuhiro, Sakai-shi, Osaka 599-8531 (JP); SAITOU, Norizou, Sakai-shi, Osaka 599-8531 (JP)
(74) Representative: Bianchetti & Minoja with Trevisan & Cuonzo IPS SRL
(86) International application number: PCT/JP2023/043299
(87) International publication number: WO 2024/128055

(57) **Abstract**

To provide a rare earth element recovery method that has a low environmental impact and can achieve rare earth element recovery at low cost and with high efficiency. A rare earth element recovery method includes: mixing a liquid containing a rare earth ion with torula yeast, thereby adsorbing the rare earth ion by the torula yeast under an acidic condition to obtain a mixed liquid; separating the torula yeast from the mixed liquid obtained in the adsorbing; and recovering the rare earth ion from the torula yeast separated in the separating.

## Description

### Technical field

The present invention relates to a rare earth element recovery method.

### Background Art

In recent years, as a method for recovering metals, a recovery method using biosorption, which uses biological materials such as microorganisms as adsorbents, has been studied. Since this method uses inexpensive biological materials, it is expected to recover metals from low-grade minerals, industrial wastewater, electronic equipment waste and so on, at a low cost and with low environmental impact.

Various techniques have been proposed for recovering precious metals and rare earths (rare earth elements) by using biosorption recovery methods.

For example, Patent Literature 1 discloses a method for recovering precious metals, including a step of contacting baker's yeast with precious metal ions in a liquid containing the precious metal ions and having a pH of 4 or lower, and a step of burning the yeast separated from the liquid. Specifically, the literature describes examples of recovering gold ions, platinum ions, and palladium ions as precious metal ions, and also describes how platinum ions can be recovered from a liquid with a pH of 1.2 that contains chromium ions.

Patent Literature 2 discloses a gold recovery method that includes a step of contacting a yeast with a solution containing gold ions, iron ions, copper ions, and halide ions under acidic conditions, a step of performing solid-liquid separation, and a step of burning the mixture containing the baker's yeast and gold. Examples of pH conditions of the solution include pH less than 0, pH of 0.55, and pH of 1.12.

Patent Literature 3 discloses a method for recovering rare earths, including a step of mixing a solution containing rare earths and milt to cause the rare earths to be adsorbed by the milt (pH of the mixed liquid is preferably 3 or above, more preferably about pH of 4), a step of collecting the milt from the mixed liquid, and a step of adding an acid solution to the collected milt to separate the rare earths and the milt. It is also described that Nd and Dy can be selectively recovered from solutions in which Fe coexists.

Patent Document 4 discloses a method for selectively recovering precious metals or rare earths from a metal solution using substances derived from Cyanidium species, or porphyrins.

Non-patent Literature 1 describes that the amount of adsorption of heavy metal ions such as Cd²⁺, Cu²⁺, Pb²⁺, and Zn²⁺ can be increased by using a phosphorylated baker's yeast, compared to a non-phosphorylated baker's yeast. It is also described that the phosphorylated baker's yeast can also adsorb rare earth ions such as Ce³⁺, Dy³⁺, Gd³⁺, La³⁺, Nd³⁺, Y³⁺, and Yb³⁺ with high efficiency. Furthermore, it is described that the phosphorylated baker's yeast can selectively adsorb rare earth ions (Nd³⁺ and Yb³⁺) from aqueous solutions containing heavy metals and the rare earth ions.

Patent Document 5 describes a method for recovering rare earth ions and/or precious metal ions by mixing a liquid containing metal ions with baker's yeast, adsorbing the metal ions onto the baker's yeast under specific conditions, and treating the yeast separated by solid-liquid separation.

### Citation List

### Patent Literature

Patent Literature 1: JP 2016-183371 A
Patent Literature 2: JP 2018-35413 A
Patent Literature 3: JP 2013-213272 A
Patent Literature 4: WO 2017/111092 A1
Patent Literature 5: WO 2023/286850 A1

### Non-Patent Literature

Non-Patent Literature 1: Yoshihiro Ojima, et al., Recovering metals from aqueous solutions by biosorption onto phosphorylated dry baker's yeast, SCIENTIFIC REPORTS, Published online: 18, January 2019, www.nature.com/scientificreports

### Summary of Invention

### Technical Problem

Conventional metal recovery methods that do not use biological materials have the problem of high environmental impact due to CO₂ emissions, sludge disposal, etc.

Furthermore, there is a need for further improvement in the efficiency and/or selectivity of conventional metal recovery methods that use biological materials. In addition, the recovery methods described in Patent Literatures 1-4 and Non-Patent Literature 1 are batch-type and at the laboratory test level, and have the problem of low productivity.

Furthermore, in the recovery method described in Patent Document 4, when using substances derived from Cyanidium species, cultivation is required, and when recovering rare earths, semi-anaerobic conditions with nitrogen aeration and semi-anaerobic heterotrophic conditions with fermentation in a dark environment are necessary, which results in the problem of complicated procedures.

The recovery method described in Non-Patent Literature 1 requires chemical modification of yeast, which is an adsorbent, and has the problem of increasing the cost of the adsorbent.

It is an object of the present invention to solve the problems in view of the above circumstances, and to provide a rare earth element recovery method that has a low environmental impact and can achieve rare earth element recovery at low cost and with high efficiency. It is another object of the present invention to provide a rare earth element recovery method that has low environmental impact and high productivity, and is suitable for industrialization.

### Solution to Problem

The present invention includes the following aspects.
(1) A rare earth element recovery method comprising:
   mixing a liquid containing a rare earth ion with torula yeast, thereby adsorbing the rare earth ion by the torula yeast under an acidic condition to obtain a mixed liquid;
   separating the torula yeast from the mixed liquid obtained in the adsorbing; and
   recovering the rare earth ion from the torula yeast separated in the separating.
(2) The rare earth element recovery method according to item 1, wherein a pH of the mixed liquid in the adsorbing is 1.0 or higher.
(3) The rare earth element recovery method according to item 1 or 2, wherein a pH of the mixed liquid in the adsorbing is 2.4 or lower.
(4) The rare earth element recovery method according to any one of items 1 to 3, further comprising treating a solid material containing a rare earth element with an acidic solution, thereby leaching a rare earth ion to obtain an acidic liquid containing the rare earth ion,
   wherein the adsorbing is carried out by mixing the acidic liquid obtained in the leaching with the torula yeast.
(5) The rare earth element recovery method according to item 4, wherein a pH of the acidic solution used in the leaching is 2.0 or lower.
(6) The rare earth element recovery method according to item 4 or 5, wherein the solid material containing a rare earth element is a mineral that contains a rare earth element.
(7) The rare earth element recovery method according to any one of items 4 to 6, wherein the solid material containing a rare earth element is apatite, iron hydroxide, or manganese oxide that contain a rare earth element.
(8) The rare earth element recovery method according to items 4 or 5, wherein the solid material containing a rare earth element is rare earth mud.
(9) The rare earth element recovery method according to any one of items 1 to 8, wherein the liquid before being mixed with the torula yeast further contains an ion of a metal other than rare earth elements.
(10) The rare earth element recovery method according to any one of items 4 to 8,
   wherein the solid material containing a rare earth element further contains a metal other than rare earth elements; and
   the liquid before being mixed with the torula yeast further contains an ion of a metal other than rare earth elements.
(11) The rare earth element recovery method according to item 9 or 10, wherein the metal other than rare earth elements is at least one selected from the group consisting of vanadium, chromium, manganese, iron, cobalt, nickel, copper, zinc, magnesium, aluminum, calcium, and titanium.
(12) The rare earth element recovery method according to any one of items 4 to 8 and 10, wherein a time for treatment with the acidic solution (leaching time) in the leaching is within one hour.
(13) The rare earth element recovery method according to any one of items 1 to 12, wherein in the adsorbing, the liquid and the torula yeast are continuously fed into a mixing vessel, and the mixed liquid including the liquid and the torula yeast is continuously discharged from the mixing vessel.
(14) The rare earth element recovery method according to any one of items 1 to 13,
   wherein in the separating, the mixed liquid obtained in the adsorbing is subjected to a solid-liquid separation to obtain a separated solid fraction, and
   in the recovering, the separated solid fraction obtained in the separating is subjected to an acid treatment to recover the rare earth ion adsorbed by the torula yeast.
(15) The rare earth element recovery method according to any one of items 1 to 13,
   wherein in the separating, the mixed liquid obtained in the adsorbing is subjected to a solid-liquid separation to obtain a separated solid fraction, and
   in the recovering, the separated solid fraction obtained in the separating is subjected to a heat treatment to burn the torula yeast, thereby recovering the rare earth ion adsorbed by the torula yeast as a concentrate thereof.
(16) The rare earth element recovery method according to item 15, wherein in the recovering, the heat treatment of the separated solid fraction is carried out by burning it in an industrial furnace.
(17) The rare earth element recovery method according to item 15 or 16, comprising recovering powder from an exhaust gas of the heat treatment, and mixing the recovered powder with the separated solid fraction before the heat treatment.
(18) The rare earth element recovery method according to any one of items 14 to 17, wherein the solid-liquid separation is carried out by at least one method selected from the group consisting of centrifugation, filtration, membrane separation, and sedimentation separation.
(19) The rare earth element recovery method according to any one of items 14 to 18, further comprising drying the separated solid fraction to lower its water content.
(20) The rare earth element recovery method according to any one of items 14 to 19, wherein a separated liquid fraction obtained by the solid-liquid separation in the separating is mixed with the liquid containing the rare earth ion before mixing with the torula yeast.

### Advantageous Effects of Invention

According to an embodiment of the present invention, a rare earth element recovery method that can achieve rare earth element recovery at low cost and with high efficiency can be provided. According to another embodiment of the present invention, a rare earth element recovery method that has high productivity and is suitable for industrialization can be provided. Furthermore, according to the embodiments, a rare earth element recovery method that has a lower environmental impact can be provided.

### Brief Description of Drawings

FIG. 1 is a block flow diagram illustrating an example of a rare earth element recovery method according to an embodiment of the present invention.
FIG. 2 is a block flow diagram illustrating another example of a rare earth element recovery method according to an embodiment of the present invention.
FIG. 3 is a schematic diagram of an example of the configuration of an apparatus that can be used for a rare earth element recovery method according to an embodiment of the present invention.

### Description of Embodiments

Preferred embodiments of the present invention will be described below.

A rare earth element recovery method according to an embodiment of the present invention includes mixing a liquid containing a rare earth ion with torula yeast, thereby adsorbing the rare earth ion by the torula yeast under an acidic condition to obtain a mixed liquid; separating the torula yeast from the mixed liquid obtained in the adsorbing; and recovering the rare earth ion from the torula yeast separated in the separating.

In the following description, "liquid containing a rare earth ion" before mixing with the yeast is also referred to as "dissolved metal liquid", as appropriate.

The rare earth element recovery method according to the embodiment of the present invention can include, as a step for preparing a dissolved metal solution (liquid containing a rare earth ion) to be mixed with torula yeast, a step (leaching step) of treating a solid material containing a rare earth element with an acidic solution, thereby leaching the rare earth ion to obtain an acidic liquid (leachate) containing the rare earth ion.

The solid material containing a rare earth element is not particularly limited, as long as it is either a solid material that contains a rare earth element or a material that includes the solid material; however, it is preferable for the material to be one that can leach a rare earth ion when treated with an acidic solution. As such a solid material, minerals containing a rare earth element, such as apatite (calcium phosphate, etc.), iron hydroxide, and manganese oxide, are preferable, and rare earth mud is particularly preferred.

The rare earth element recovery method according to the embodiment of the present invention includes a step of mixing a liquid containing a rare earth ion (dissolved metal solution) with torula yeast, thereby adsorbing the rare earth ion by the torula yeast (adsorption step).

As the liquid containing a rare earth ion (dissolved metal solution), the leachate obtained in the above-mentioned leaching step can be suitably used.

torula yeast (scientific name: Candida utilis) is widely used in foods, and such yest can be used in embodiments of the present invention. Synonyms of torula yeast include Cyberlindnera jadinii, Hansenula jadinii, Lindnera jadinii, Pichia jadinii, Saccharomyces jadinii, Torula utilis, Torulopsis utilis, and Torulopsis utilis var. major.

torula yeast is readily available and easy to handle, thus reducing costs. Furthermore, in embodiments of the present invention, since rare earth ions are adsorbed onto the yeast at a rapid rate, the treatment efficiency of the dissolved metal solution can be increased, and consequently, the capacity of the mixing vessel used to mix the dissolved metal solution and torula yeast can be reduced, making the recovery apparatus used in the embodiments of the present invention more compact.

The torula yeast used in the embodiment of the present invention does not need to be alive, and dead microorganisms such as waste yeast can be used as long as the rare earth ion adsorption function is not inhibited. By using dead microorganisms such as waste yeast, not only can costs be reduced, but the environmental impact can be reduced through life cycle assessment (LCA). Furthermore, while the use of live yeast is affected by environmental factors (e.g., low ambient temperatures will cause the yeast to cease activity), the use of dead microorganisms is less affected by environmental factors.

The rare earths in the embodiments of the present invention, also called "rare earth elements" include scandium (Sc), yttrium (Y), and lanthanides (the 15 elements from lanthanum (La) to lutetium (Lu) in the periodic table), i.e., the rare earths are scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

The liquid containing a rare earth ion (dissolved metal solution) in the embodiment of the present invention, i.e., the liquid to be mixed with torula yeast, is a liquid containing an ion of at least one rare earth selected from the above rare earths.

In the rare earth element recovery method according to the embodiment of the present invention, the dissolved metal solution (liquid to be mixed with torula yeast) is not particularly limited as long as it contains an ion of the rare earth to be recovered, but a liquid containing at least one rare earth ion selected from ions of Sc, Y, the 15 elements of lanthanides can be used, and specifically a liquid containing at least one rare earth ion selected from ions of Sc, Y, La, Ce, Pr, Nd, Pm, Sm, Eu, Gd, Tb, Dy, Ho, Er, Tm, Yb, and Lu can be used.

Furthermore, in the rare earth element recovery method according to the embodiment of the present invention, the dissolved metal solution (liquid to be mixed with torula yeast) may contain a heavy metal ion, as an ion of a metal other than rare earths (metal not intended for recovery), and examples of the heavy metal include vanadium, chromium, manganese, iron, cobalt, nickel, copper, and zinc, and the liquid may contain at least one ion of these. The dissolved metal solution in the embodiment of the present invention may also contain at least one ion of a light metal such as magnesium, aluminum, calcium, or titanium.

In the embodiment of the present invention, the solvent of the dissolved metal solution (liquid to be mixed with torula yeast) is preferably water or an aqueous solvent containing water, and may contain a water-soluble solvent other than water, as long as it does not impair the adsorption of rare earth ions by torula yeast. Examples of the water-soluble solvent include alcohols such as methanol, ethanol, and propanol, acetone, acetonitrile, dioxane, tetrahydrofuran, dimethylformamide, dimethylacetamide, and dimethylsulfoxide. The water content in this solvent is preferably 70 to 100% by volume, more preferably 80 to 100% by volume, and even more preferably 90 to 100% by volume, and it is particularly preferable that this solvent is water.

In the embodiment of the present invention, the dissolved metal solution (liquid to be mixed with torula yeast) can be prepared by treating a material from which a rare earth ion can be extracted (hereinafter referred to as the "recovery object" as appropriate).

The recovery object is not particularly limited, as long as a rare earth ion can be extracted, and examples of such recovery objects include solids or liquids containing a rare earth element, a rare earth ion, or a salt thereof. Examples of the recovery object include rare earth-containing solid materials such as apatite (calcium phosphate, etc.), iron hydroxide, and manganese oxide, all of which contain a rare earth element, and for example, mineral resources such as rare earth mud and manganese nodules can be used.

As for a treating method for extracting a rare earth ion from the recovery object into a liquid, if the recovery object is a solid material containing a rare earth element, the method can be carried out through the above-mentioned leaching step. For example, if the recovery object is a seabed mineral resource such as rare earth mud, it is preferable to obtain a leachate by performing an acid treatment, and if necessary, dilution or concentration treatment, solvent replacement, or pH adjustment can be performed to obtain the desired dissolved metal solution.

For the acid treatment in the leaching step described above, an acidic solution having a pH of 2.0 or lower is preferably used, and an acidic solution having a pH of 1.5 or lower is more preferably used. When the pH of the acidic solution is sufficiently low, rare earth ions are easily eluted, and hydroxides are less likely to precipitate. The pH of the leachate (acidic liquid containing the rare earth ion) obtained in the leaching step is also preferably 2.0 or lower, and more preferably 1.5 or lower. The pH of the acidic solution used in the acid treatment in the leaching step is preferably 1.0 or higher, and the pH of the obtained leachate is also preferably 1.0 or higher. By carrying out the acid treatment in the leaching step with an acidic solution having a pH of 1.0 or higher, the difference in pH with the subsequent adsorption treatment (pH of the mixed liquid in the adsorption step) can be reduced, and in this case, the pH adjustment before the adsorption step can be omitted or performed with fine adjustment.

For the acid treatment in the leaching step, an acidic solution of a strong acid such as hydrochloric acid (aqueous HCl solution), sulfuric acid, or nitric acid can be suitably used, and the acid concentration can be set, for example, in the range of 0.01 to 5 M (mol/L), or in the range of 0.01 to 1 M (mol/L).

If the recovery object contains a metal, its ion or a salt thereof that is not intended to be recovered, the liquid (leachate) obtained by treating the recovery object may contain the ion of the metal that is not intended to be recovered.

It is preferable to remove insoluble material from the dissolved metal solution, which is the leachate obtained by treating the recovery object, before mixing it with the yeast.

When a solid material, such as rare earth mud, whose main component is apatite (calcium phosphate, etc.) is used as the recovery object, rare earth ions can be quickly eluted by the acid treatment (leaching step) of the recovery object. Therefore, the time spent treating with acidic solution in the leaching step (leaching time) can be shortened, and can be set to, for example, within one hour. This not only shortens the time required for the leaching step but also makes it possible to reduce the content of metal ions other than rare earth ions in the obtained dissolved metal solution, when these metal ions other than rare earth ions are difficult to dissolve in the acidic solution. For example, as shown in Table 2 below, it can be observed that when the leaching time is 60 minutes or less, the content of Fe ions can be reduced compared to when the leaching time is 24 hours.

Furthermore, while rare earth leaching proceeds quickly and with high yields regardless of temperature, the leaching rate of heavy metals (not intend for recovery), such as Fe contained in the rare earth mud, increases as the temperature rises. Therefore, from the standpoint of energy savings and metal selectivity, it is preferable to carry out the rare earth mud leaching step at room temperature. The leaching step can be carried out depending on the ambient temperature, for example in the range of 5 to 35°C, and preferably in the range of 10 to 30°C.

The rare earth element recovery method according to the embodiment of the present invention is an industrially useful technology for recovering rare earths from seabed mineral resources, such as rare earth mud.

To adjust the pH of the dissolved metal solution, an acid such as hydrochloric acid or sulfuric acid, or an alkali such as an aqueous sodium hydroxide solution can be added to the dissolved metal solution as a pH adjuster before mixing with torula yeast. Also, after mixing the dissolved metal solution with torula yeast, an acid such as hydrochloric acid or sulfuric acid, or an alkali such as an aqueous sodium hydroxide solution may be added as a pH adjuster to adjust the pH of the resulting mixed solution.

If the recovery object is treated under acidic conditions and the resulting leachate (dissolved metal solution) has the desired pH, pH adjustment can be omitted. Since the leaching step described above is carried out under acidic conditions, pH adjustment of the resulting leachate (dissolved metal solution) can be omitted, or only fine adjustments may be required, simplifying the process.

In the adsorption step in the embodiment of the present invention, the dissolved metal solution and torula yeast are mixed, and rare earth ions are adsorbed by the torula yeast in the resulting mixed liquid. The adsorption step can be carried out under atmospheric pressure conditions.

From the point of view of further enhancing the adsorption effect of rare earth ions onto torula yeast, it is preferable for the adsorption step to be carried out under acidic conditions, and it is preferable that the pH of the mixed liquid of the dissolved metal solution and the torula yeast be within a suitable pH range, depending on the type of rare earth to be recovered.

By setting the pH of the mixed liquid in the adsorption step to be within a pH range suitable for the type of rare earth to be recovered, the amount of rare earth ions adsorbed by torula yeast (recovery efficiency) and/or selectivity can be increased. From this perspective, the pH of the mixed liquid in the adsorption step is, for example, preferably 0.1 or higher, more preferably 0.5 or higher, even more preferably 0.8 or higher, and most preferably 1.0 or higher, and the pH is preferably 3 or lower, more preferably 2.4 or lower, and even more preferably 2.1 or lower.

Furthermore, if the pH of the leachate in the leaching step or the mixed liquid in the adsorption step is sufficiently low, co-precipitation of rare earth ions can be prevented, even if metal ions other than the rare earth ions (e.g., Fe ions, Al ions) are present in a state where those metal ions would precipitate.

The temperature of the mixed liquid of the dissolved metal solution and torula yeast in the adsorption step can be set in the range of 1 to 40°C, for example. From the standpoint of energy cost for temperature control, the adsorption performance of torula yeast, and the stability of torula yeast and rare earth ions in the liquid, the temperature is preferably 10°C or higher, more preferably 15°C or higher, and even more preferably 20°C or higher, while the upper limit of the temperature is preferably 35°C or lower.

The time for adsorption of rare earth ions onto torula yeast in the adsorption step (hereinafter referred to as "adsorption time") is set appropriately depending on the pH of the mixed liquid, the content and type of rare earth ions, and, if other metal ions not intended for recovery are present, their content and type, and can be set, for example, in the range of 5 to 60 minutes. From the standpoint of sufficient adsorption of rare earth ions onto torula yeast, the adsorption time is preferably 10 minutes or more, while from the standpoint of efficiency, it is preferably 60 minutes or less, more preferably 40 minutes, and even more preferably 30 minutes or less.

Furthermore, when other metal ions which are not intended for recovery and take a long time to be adsorbed by the yeast coexist in the mixed liquid with rare earth ions which are to be recovered and can be adsorbed by the yeast in a relatively short time, the selectivity for the rare earth ions to be recovered can be increased by adjusting the adsorption time.

In the adsorption step, the concentration of the rare earth ions to be recovered in the dissolved metal solution, or in the mixed liquid of the dissolved metal solution and torula yeast, and the concentration of other metal ions not intended for recovery if the solution contains them, can be appropriately adjusted depending on torula yeast cell concentration. For example, the concentrations of the rare earth ions and metal ions can be appropriately set within a range of 1 × 10⁻⁵ mol/m³ to 1 × 10⁴ mol/m³, and from the viewpoint of recovery efficiency, the concentrations are preferably 1 × 10⁻¹ mol/m³ or higher, and from the viewpoint of recovery efficiency and/or selectivity, they are preferably 1 × 10² mol/m³ or lower.

In the adsorption step, the cell concentration (microbial cell concentration) in the mixed liquid of the dissolved metal solution and torula yeast can be appropriately set depending on the concentration of rare earth ions to be adsorbed by torula yeast, and the cell concentration can, for example, be set in the range of 1.0 × 10⁶ cells/m³ to 1.0 × 10¹⁸ cells/m³, preferably 1.0 × 10¹⁰ cells/m³ to 1 × 10¹⁶ cells/m³, and more preferably 1.0 × 10¹² cells/m³ to 1 × 10¹⁶ cells/m³.

The adsorption step can include a process of continuously feeding the dissolved metal solution and torula yeast into a mixing vessel and continuously discharging the mixed liquid containing the dissolved metal solution and the yeast from the mixing vessel. By keeping the feed amount and the discharge amount the same, the adsorption step can be carried out continuously. The mean residence time in the steady state can be set appropriately depending on the conditions related to the adsorption step described above.

In the separation step in the embodiment of the present invention, the yeast on which rare earth ions are adsorbed is separated from the mixed liquid of the dissolved metal solution and torula yeast.

This separation can be carried out using common methods for solid-liquid separation, such as centrifugation, filtration, membrane separation, and sedimentation. Two or more of these separation methods may be combined.

In the recovery step following the separation step in the embodiment of the present invention, rare earth ions are recovered from the torula yeast separated in the separation step.

The rare earth ions adsorbed by the torula yeast can be recovered as a concentrate thereof by burning the torula yeast. Also, the rare earth ions adsorbed by the torula yeast can be desorbed by acid treatment of the torula yeast.

When rare earth ions are recovered by acid treatment, as the acid solution used in the acid treatment, acid solutions of strong acids, such as hydrochloric acid, sulfuric acid, nitric acid, or aqua regia, adjusted to a lower pH than that of the adsorption treatment (the pH value of the mixed liquid in the adsorption step) can be used. For example, a 0.1 to 12 M hydrochloric acid (HCl aqueous solution) can be suitably used.

The temperature of the acid solution during the acid treatment may be room temperature, for example, 5 to 35°C, but it may be set to, for example, about 60 to 100°C to promote the desorption of rare earth ions.

In addition, the acid treatment may be performed multiple times, and the acid treatment conditions (such as acid concentration or temperature) may be the same or different.

When the torula yeast is burned in the recovery step, the torula yeast can be burned by heat treating the separated solid fraction containing the torula yeast obtained by solid-liquid separation in the separation step. The separated solid fraction containing the torula yeast may be subjected to a drying treatment to reduce the moisture content, if necessary, and then heat-treated.

For the heat treatment to burn the torula yeast, a conventional industrial furnace, such as an incinerator, burning furnace, or combustion furnace, can be used. From the perspective of making the process continuous and suitable for industrialization, it is preferable to use a rotary kiln.

The temperature for burning the torula yeast can be set appropriately, as long as it is a temperature at which the torula yeast can be burned; for example, it can be set to 300°C or higher. From the point of view of burning the torula yeast more sufficiently, the temperature is preferably 400°C or higher, more preferably 500°C or higher, while from the point of view of preventing metal oxidation and energy costs, the temperature is preferably 800°C or lower, and more preferably 750°C or lower.

The yeast to be fed into the furnace may be in a wet state immediately after the separation, or in a powder form after being subjected to a drying treatment after the separation.

The torula yeast after burning is sublimated or converts into ashes, and the rare earth ions that were adsorbed by the torula yeast can be recovered as a concentrate.

As described above, in the rare earth element recovery method according to the embodiment of the present invention, after the dissolved metal solution is prepared (preferably after performing the leaching step), the adsorption step, the separation step, and the recovery step are performed in that order.

Although each of these steps may be performed separately, it is preferable to carry them out continuously from the perspective of productivity. Additionally, while the process including these steps may be repeated multiple times in a batch manner, it is preferable to perform the process continuously from the perspective of productivity.

Hereinafter, the process of the rare earth element recovery method according to the embodiment of the present invention will be explained using the drawings.

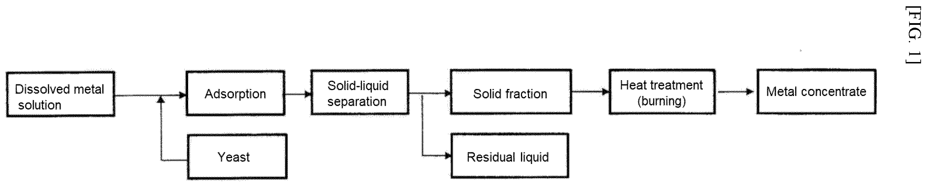

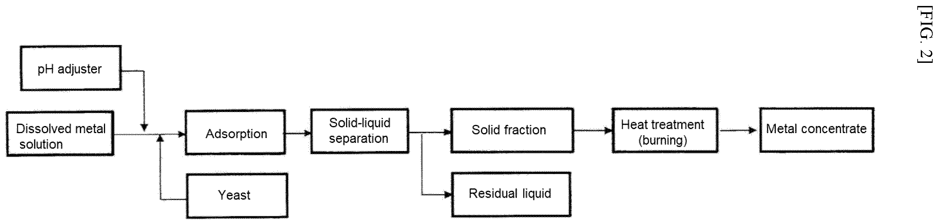

FIGs. 1 and 2 are block flow diagrams for illustrating rare earth element recovery methods according to embodiments of the present invention (when the recovery step is carried out by heat treatment). In the following description, torula yeast will be simply referred to as "yeast."

First, in the leaching step, a leachate containing rare earth ions is obtained to prepare a dissolved metal solution.

Next, the dissolved metal solution is mixed with yeast, and the rare earth ions are adsorbed by the yeast under predetermined pH and temperature conditions (adsorption step).

In this case, if the pH of the dissolved metal solution is not within the predetermined range, a pH adjuster (acid or alkali) can be added either to the dissolved metal solution before mixing the yeast, or to a mixed liquid after mixing the yeast, in order to adjust it to the predetermined range. FIG. 2 shows a case where a pH adjuster is added to the dissolved metal solution before mixing the yeast. If the pH of the dissolved metal solution is within a predetermined range, it is not necessary to adjust the pH of the dissolved metal solution; however, if the pH of the mixed liquid changes during the adsorption step and falls outside the predetermined range, it is preferable to adjust the pH of the mixed liquid. If the pH of the mixed liquid in the adsorption step is not within the predetermined range, a pH adjuster (acid or alkali) can be added to the mixed liquid to bring the pH within the predetermined range.

After a predetermined time has elapsed since mixing the dissolved metal solution and the yeas (once the adsorption step is completed), the mixed liquid is subjected to solid-liquid separation to obtain the solid fraction (separated solid fraction) and residual liquid (solid-liquid separation step).

Next, the obtained solid fraction is heat-treated to burn off the yeast contained in the solid fraction, and the rare earth ions adsorbed by the yeast are recovered as a concentrate (metal concentrate) (recovery step).

The solid fraction obtained by the solid-liquid separation may be fed to a heat treatment furnace after being washed if necessary. The solid fraction obtained from the solid-liquid separation may also be fed into a heat treatment furnace after being subjected to a drying treatment to reduce the water content.

When the rare earth ion recovery process is performed multiple times in a batch manner, or continuously using, for example, the apparatus described below, the residual liquid obtained by the solid-liquid separation can be mixed with the dissolved metal solution before mixing with the yeast, if necessary. Depending on the separation efficiency of the solid-liquid separation, the residual liquid may be returned to the mixed liquid in the solid-liquid separation step.

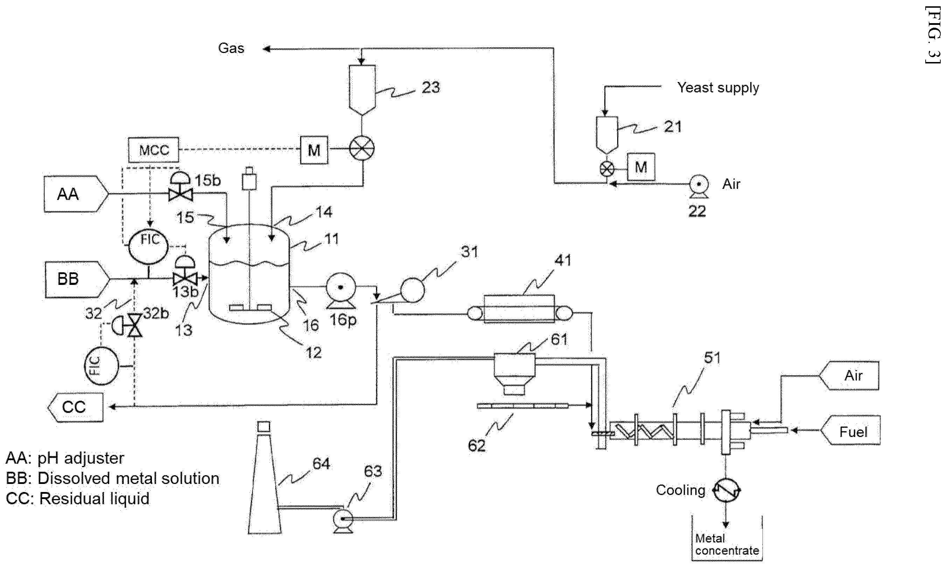

FIG. 3 shows a schematic diagram of an exemplary configuration of an apparatus that can be used for the rare earth element recovery method according to the embodiment of the present invention.

The apparatus shown in FIG. 3 has, as its main components, a mixing vessel 11 for the adsorption step, a solid-liquid separator 31 for the separation step, and a heat treatment furnace 51 for the recovery step. Between the solid-liquid separator 31 and the heat treatment furnace 51, a dryer 41 for drying the solid fraction (separated solid fraction) separated by the solid-liquid separator 31 is provided in order to efficiently burn the yeast in the heat treatment furnace 51. In addition, a dust collector 61 for collecting the powder in the exhaust gas is connected to the exhaust gas outlet side of the heat treatment furnace 51(on the supply port side for separated solid fraction), and the exhaust gas that passes through the dust collector 61 is blown to a flare stack 64 by a blower 63.

The mixing vessel 11 is equipped with an agitator 12 and a temperature control means (not shown) for controlling the temperature inside the vessel. By the agitator 12, the yeast can be mixed so that it is uniformly dispersed in the dissolved metal solution. As the temperature control means, for example, a heat medium circulation system which includes piping located inside the vessel and a temperature controller for adjusting the temperature of a heat medium for cooling or heating that flows through the piping can be used.

The dissolved metal solution is fed to the mixing vessel 11 from an inlet 13 via a control valve 13b. The pH adjuster is also fed to the mixing vessel 11 from an inlet 15 via a control valve 15b.

After the yeast is stored in a storage section 21, it is transferred to a feeder 23 by air from an air pump 22 via a powder flow rate regulator such as a rotary valve directly below the storage section 21, and then fed into the mixing vessel 11 from a yeast inlet 14 via a powder flow rate regulator such as a rotary valve directly below the feeder 23.

As the feeder 23, a powder feeder such as a belt-type, table-type, screw-type, vibration-type, or rotary gravity-type feeder can be used.

From the mixing vessel 11, the mixed liquid in the vessel can be discharged from a discharge part 16, and the discharged mixed liquid is sent to the solid-liquid separator 31 by a feed pump 16p.

As the solid-liquid separator 31, a sedimentation separator, a centrifugal separator, a membrane separator, a filtration apparatus, etc., can be used, and two or more of these may be combined.

When using filtration such as pressure filtration or centrifugal filtration for the solid-liquid separation, the air permeability of the filter cloth is preferably 30 cc/cm²/min or less as the particle size of the yeast is very small, ranging from 1 µm to 50 µm, with an average particle size of about 7 µm. However, since reducing the air permeability of the filter cloth significantly increases the filtration time, it is preferable to have a moderate air permeability. Furthermore, if the particle size of the yeast is small and the air permeability of the filter cloth is high, it may leak through the filter cloth. In such cases, it is preferable to recycle it by feeding the leaked slurry to the solid-liquid separator or to a solid-liquid separator of another batch. This can reduce yeast recovery loss.

A filtration aid may be added to the mixed liquid to reduce leakage from the filter cloth. When using a filtration aid, it is preferable to use a filtration aid which is bio-derived, such as cellulose, and can be burned in a downstream burning facility. Furthermore, the use of the filtration aid can be expected to reduce the filtration time.

When using a filter cloth, it should be noted that yeast has the property of easily passing through the filter cloth when it is in contact with the solvent for a long time. This is thought to be because the yeast easily changes its shape, as it acclimates to the solvent or is subjected to shearing forces due to prolonged agitation, and the yeast that is subjected to centrifugal force or pressure can easily pass through the mesh of the filter cloth. Although this property varies depending on the yeast concentration, separation performance can be maintained if the contact time is around several hours. Therefore, it is preferable for the contact time between the yeast and the solvent to be within around several hours, although it depends on the air permeability of the filter cloth.

In the case of centrifugal filtration, a centrifugal force of 600 G is sufficient to separate the yeast that has adsorbed rare earth ions, and the force can be set within a range of 500 to 700 G, for example.

When using a sedimentation centrifuge as the solid-liquid separator, a centrifugal force of 600 G or more is preferred. The preferred processing time varies depending on the centrifugal force; however, if the force is 600 G, the processing time is preferably 5 to 10 minutes, and if it is 1000 G or more, the processing time is preferably about several minutes (for example, 1 to 4 minutes). When reducing the water content of the solid fraction after solid-liquid separation, the centrifugal force should preferably be 1000 G or more.

On the other hand, depending on the subsequent process (for example, when the solid fraction after the solid-liquid separation is to be washed), the separation may be performed in multiple stages with different centrifugal forces depending on the purpose, such as a multi-stage separation in which the solvent is roughly separated with a centrifugal force of about 600 G to obtain a highly fluid solid fraction (cake) with high water content, and a washing liquid is added to it and then washing is performed, and thereafter solid-liquid separation is performed with increased centrifugal force.

When the centrifugal force is 1000 G or more, the solid-liquid separation is sufficient even within a minute of processing time, and if the leakage of yeast into the filtrate is desired to be stably kept within a few percent, it is preferable that the processing time is set to several minutes.

When using a solution with a pH of lower than 2 for the solid-liquid separation, it is preferable to use acid-resistant materials such as Teflon (registered trademark) coating, titanium, or Hastelloy (registered trademark). When using a solution with a pH of 3 or higher or a pH of 4 or higher, materials made of SUS can be used.

Regarding taking out the solid fraction (including the yeast) after the solid-liquid separation, it can be performed using air blast in both cases of centrifugal filtration and centrifugal sedimentation. However, when the solid-liquid separation is performed under conditions of low centrifugal force, the viscosity of the solid fraction may be so high that it becomes difficult to discharge by air blast, and in such cases, it is preferable to scrape off the solid fraction manually. When the water content of the solid fraction is reduced by performing the solid-liquid separation with increased centrifugal force, the solid fraction can be scraped off automatically, making it easier to automate the process to the next heat treatment step.

The residual liquid separated by the solid-liquid separator 31 can be mixed with the dissolved metal solution before being fed to the mixing vessel 11, through a residual liquid recycle line 32 via a control valve 32b.

Additionally, if the yeast content is high, the residual liquid separated by the solid-liquid separator 31 may be returned (not shown) to the solid-liquid separator 31.

The solid fraction (separated solid fraction) separated by the solid-liquid separator 31 is dried in a dryer 41 and then transferred to a heat treatment furnace 51. As the dryer 41, a dryer used for ordinary powder drying, such as an aeration-type or a rotary-type dryer, can be used.

The separated solid fraction may be fed to the heat treatment furnace 51 without being dried by the dryer 41, and both drying and heat treatment (burning) of the separated solid fraction may be performed in the heat treatment furnace 51; however, it is preferable to dry the separated solid fraction in advance, from the point of view of increasing the efficiency of the heat treatment.

In particular, when the acidity of the separated solid fraction is high (e.g., a pH of 5 or lower), it is preferable to perform a drying step in advance. By performing the drying step, the acidic components contained in the separated solid fraction can be removed, thus preventing acid corrosion of the heat treatment furnace 51.

When the acidity of the separated solid fraction is high (e.g., a pH of 5 or lower) and the solid fraction is fed to the heat treatment furnace 51 without being dried, it is preferable to wash the separated solid fraction in advance to reduce the acidity, and the acidity is preferably set to a pH of 5.2 to 7, and more preferably to a pH of 6 to 7.

As the heat treatment furnace 51, an industrial furnace, such as a common incinerator or electric furnace, can be used and is not particularly limited, as long as it is capable of burning the yeast; however, a rotary kiln is preferable. By using the rotary kiln, the drying of the separated solid fraction, the burning of the yeast, and the recovery of metals can be performed continuously.

The separated solid fraction fed to the heat treatment furnace 51 (e.g., rotary kiln) is sent gradually while rotating slowly, and is dried by combustion due to air and fuel fed from the side opposite to the feed side of the separated solid fraction, and then the yeast in the solid fraction is burned. As a result, the yeast is sublimated or converted into ashes, and the metal ions adsorbed by the yeast are recovered as a concentrate.

The exhaust gas from the heat treatment furnace 51 is directed to a flare stack 64 through a dust collector 61 by a blower 63. The powder recovered by the dust collector 61 is mixed with the separated solid fraction, which has not yet been fed to the heat treatment furnace 51, via a conveyance line 62, such as a belt conveyor. Since the recovered powder contains yeast that adsorbs rare earth ions, the rare earth recovery efficiency can be increased by mixing it with the separated solid fraction.

### Examples

Hereinafter, the present invention will be explained in further detail with reference to the Examples and Comparative Examples; however, the invention is not limited to these Examples.

### (Chemical leaching treatment of rare earth mud simulant solution)

A slurry containing rare earth mud (including seawater) was prepared as a simulated liquid to replicate the actual rare earth mud liquid, and this slurry was decanted three times using pure water.

The precipitate (muddy solid material) after decantation was mixed with hydrochloric acid (HCl aqueous solution) and subjected to chemical leaching treatment under the following conditions.
Hydrochloric acid (HCl aqueous solution) concentration: 0.5 M (initial concentration)
Rare earth mud concentration: 10 w/v%
Temperature: Room temperature
Processing time (leaching time): 10 minutes, 60 minutes, 24 hours

After the above chemical leaching treatment, centrifugation was performed (10 minutes), followed by filtration of the liquid phase through a filter with a pore size of 0.2 µm (30 minutes), and the pH of the filtered liquid phase (leachate) was adjusted.

At this time, a 50 wt% NaOH aqueous solution was used as a pH adjuster, and the initial pH of the leachate was adjusted to pH 0.4, pH 1.0, pH 1.5, and pH 2.0, respectively, and the solution was then left to stand overnight.

The metal components in the resulting liquid (leachate) were measured using ICP (Inductively Coupled Plasma) emission spectroscopy, and the results are summarized in Tables 1 and 2. Table 1 shows the composition of the leachate adjusted to each pH (leaching time: 10 minutes), and Table 2 shows the composition of the leachate adjusted to pH 0.4 (leaching time: 10 minutes, 60 minutes, and 24 hours).

Sc, Lu, and Tm were below the detection limit.

### [Table 1]

**(Table 1)**

| | Composition of leachate (ppm) | | | | | | | | | | | | | | | |
|---|---|---|---|---|---|---|---|---|---|---|---|---|---|---|---|---|
| pH | Al | Cu | Fe | Y | La | Ce | Pr | Nd | Sm | Eu | Gd | Tb | Dy | Ho | Er | Yb |
| pH0.4 | 443 | 11.7 | 27.7 | 18.9 | 10.9 | 5.9 | 4.9 | 12.3 | 4.4 | 0.8 | 3.8 | 1.7 | 3.5 | 0.9 | 3.2 | 1.2 |
| pH1.0 | 438 | 7.3 | 24.8 | 18.4 | 9. 6 | 1.7 | 2.6 | 14.5 | 2.9 | 0.5 | 2.6 | 0.16 | 2.8 | 0.4 | 2.5 | 0.9 |
| pH1.5 | 448 | 7.4 | 23.8 | 18.7 | 9.6 | 1.7 | 2.6 | 11.1 | 2.9 | 0.5 | 2.6 | 0.16 | 2.8 | 0.4 | 2.5 | nd |
| pH2.0 | 439 | 7.3 | 15.1 | 19.1 | 9.4 | nd | 2.7 | 10.4 | 2.7 | 0.3 | 2.5 | nd | 2.6 | 0.3 | 1.3 | 0.8 |

| | | | | | | | | | | | | | | | | |
|---|---|---|---|---|---|---|---|---|---|---|---|---|---|---|---|---|
| In the table, "nd" indicated below the detection limit. | | | | | | | | | | | | | | | | |

### [Table 2]

**(Table 2)**

| | Composition of leachate (ppm) | | | | | | |
|---|---|---|---|---|---|---|---|
| Leaching time | Al | Cu | Fe | Y | La | Ce | Nd |
| 10 minutes | 443 | 11.7 | 27.7 | 18.9 | 10.9 | 5.9 | 12.3 |
| 60 minutes | - | - | 52.5 | - | - | - | - |
| 24 hours | 950 | 17.2 | 250 | 23.2 | 13.0 | 7.7 | 14.6 |

In the table, "-" indicates not measured.

### (Example 1)

As described above, chemical leaching treatment (leaching time: 10 minutes) was carried out on the rare earth mud simulant solution to prepare a rare earth leachate (pH 2.0).

With 5 ml of the prepared leachate with a pH of 2.0, 40 mg of commercially available torula yeast (manufactured by Kohjin Life Sciences Co., Ltd., product name: KR yeast) was mixed (dry yeast content: 8 g/L), and the mixture was shaken and stirred for 30 minutes in an incubator (34°C) (adsorption step), followed by filtration through a filter with a pore size of 0.2 µm. The pH of the filtrate (liquid phase) was 2.2.

The metal ion concentration in the obtained filtrate (liquid phase) was measured using ICP (Inductively Coupled Plasma) emission spectroscopy. The results are shown in Table 3. The numerical values in parentheses in the table indicate percentage adsorption.

The percentage adsorption of each metal ion was calculated according to the following formula. Percentage adsorption (%) = (metal ion concentration in the leachate before addition of yeast - metal ion concentration in the filtrate) / metal ion concentration in the leachate before addition of yeast × 100

### (Comparative Example 1)

Metal ion adsorption treatment (adsorption step) was carried out in the same manner as in Example 1, except that the torula yeast was replaced with baker's yeast (manufactured by Oriental Yeast Co., Ltd., trade name: Dry Yeast 500 G), and the metal ion concentration in the filtrate (liquid phase) was measured using ICP. The results are shown in Table 3.

### (Example 2)

Metal ion adsorption treatment (adsorption step) was carried out in the same manner as in Example 1, except that the content of the torula yeast was changed to 16 g/L, and the metal ion concentration in the filtrate (liquid phase) was measured. The results are shown in Table 3.

### (Comparative Example 2)

Metal ion adsorption treatment was carried out in the same manner as in Example 2, except that the torula yeast was replaced with baker's yeast (manufactured by Oriental Yeast Co., Ltd., trade name: Dry Yeast 500 G), and the metal ion concentration in the filtrate (liquid phase) was measured. The results are shown in Table 3.

### [Table 3]

**(Table 3)**

| | Amount of yeast in adsorption step (g/L) | Composition of liquid phase after adsorption step (ppm) | | | | | | |
|---|---|---|---|---|---|---|---|---|
| | | Al | Cu | Fe | Y | La | Nd | Dy |
| Example 1 | 8 | 389 (11%) | 6.8 (7%) | 6.6 (56%) | 12. 4 (35%) | 6.0 (36%) | 5.8 (44%) | 1. 4 (46%) |
| Comparative Example 1 | 8 | 426 (2%) | 7.0 (4%) | 12.1 (20%) | 18.5 (3%) | 9.2 (2%) | 10.0 (4%) | 2.5 (4%) |
| Example 2 | 16 | 318 (28%) | 5. 7 (22%) | 4.4 (71%) | 6.5 (66%) | 3.0 (68%) | 2.6 (75%) | 0.5 (81%) |
| Comparative Example 2 | 16 | 405 (8%) | 5.6 (23%) | 11.0 (27%) | 18.0 (6%) | 9.0 (4%) | 9. 7 (7%) | 2.4 (8%) |
| Leachate (pH2. 0) | - | 439 | 7. 3 | 15. 1 | 19.1 | 9.4 | 10.4 | 2.6 |

### (Example 3)

Metal ion adsorption treatment (adsorption step) was carried out in the same manner as in Example 1, except that a leachate with a pH of 1.0 was used, and the metal ion concentration in the filtrate (liquid phase) was measured. The pH of the filtrate (liquid phase) was 1.1. The results are shown in Table 4. The numerical values in parentheses in the table indicate percentage adsorption.

### (Example 4)

Metal ion adsorption treatment (adsorption step) was carried out in the same manner as in Example 2, except that a leachate with a pH of 1.0 was used, and the metal ion concentration in the filtrate (liquid phase) was measured. The pH of the filtrate (liquid phase) was 1.2. The results are shown in Table 4.

### (Example 5)

Metal ion adsorption treatment (adsorption step) was carried out in the same manner as in Example 1, except that a leachate with a pH of 1.5 was used, and the metal ion concentration in the filtrate (liquid phase) was measured. The pH of the filtrate (liquid phase) was 1.6. The results are shown in Table 4.

### (Example 6)

Metal ion adsorption treatment (adsorption step) was carried out in the same manner as in Example 2, except that a leachate with a pH of 1.5 was used, and the metal ion concentration in the filtrate (liquid phase) was measured. The pH of the filtrate (liquid phase) was 1.6. The results are shown in Table 4.

### [Table 4]

**(Table 4)**

| | pH of leachate | Amount of yeast in adsorption step (g/L) | Composition of liquid phase after adsorption step (ppm) | | | | | | |
|---|---|---|---|---|---|---|---|---|---|
| | | | Al | Cu | Fe | Y | La | Nd | Dy |
| Example 3 | 1.0 | 8 | 429 (2%) | 7.4 (0%) | 8.0 (68%) | 13. 8 (25%) | 7.0 (27%) | 7.3 (50%) | 1.8 (36%) |
| Example 4 | 1.0 | 16 | 417 (5%) | 7.0 (4%) | 4. 3 (83%) | 9.2 (50%) | 4.5 (54%) | 4.4 (70%) | 1.1 (61%) |
| Leachate (pH1. 0) | 1.0 | - | 438 | 7.3 | 24.8 | 18.4 | 9.6 | 14.5 | 2.8 |
| Example 5 | 1.5 | 8 | 429 (4%) | 7.0 (5%) | 10.0 (58%) | 13.1 (30%) | 6.6 (31%) | 6.9 (38%) | 1.7 (39%) |
| Example 6 | 1.5 | 16 | 419 (6%) | 7.0 (5%) | 6.8 (71%) | 8.7 (53%) | 4.2 (56%) | 4.1 (63%) | 1.0 (64%) |
| Leachate (pH1.5) | 1.5 | - | 448 | 7.4 | 23.8 | 18.7 | 9.6 | 11.1 | 2.8 |

### (Example 7) Desorption treatment of rare earth ions adsorbed on torula yeast

The solid fraction (torula yeast adsorbing rare earth ions) in the mixed liquid after the adsorption treatment (adsorption step) in Example 2 was washed with water. Specifically, the mixed liquid after the adsorption treatment (adsorption step) was subjected to solid-liquid separation at 3000 G for 10 minutes using a centrifuge, and the obtained solid fraction was then mixed with pure water and stirred using a vortex mixer to wash it, with the water washing being carried out a total of three times.

The solid fraction after the water washing was stirred in a 0.2 M HCl aqueous solution at room temperature for 3 minutes using a vortex mixer to perform a desorption treatment. A portion of the resulting mixture was taken and filtered through a filter with a pore size of 0.2 µm, and the metal ion concentration in the filtrate (liquid phase) was then measured by ICP emission spectroscopy to determine the amount of metal ions desorbed (mg) by the 0.2 M HCl aqueous solution.

Next, the mixture after the desorption treatment was subjected to solid-liquid separation using a centrifuge at 3000 G for 10 minutes, and the obtained solid fraction was then stirred in 12 M concentrated hydrochloric acid at 90°C for 30 minutes using a vortex mixer to perform the desorption treatment again. A portion of the resulting mixture was taken and filtered through a filter with a pore size of 0.2 µm, and the metal ion concentration in the filtrate (liquid phase) was then measured by ICP emission spectroscopy to determine the amount of metal ions desorbed (mg) by the concentrated hydrochloric acid.

The results are shown in Table 5. In the table, each "amount of metal ion adsorbed onto yeast in Example 2 (mg)" is a value calculated from the measured values of the composition of the leachate at pH 2.0, and the measured values of the composition of the liquid phase after the adsorption treatment in Example 2.

The results shown in Tables 3 and 4 indicate that, according to an embodiment of the present invention, rare earths can be recovered under acidic conditions using torula yeast.

Additionally, the results shown in Table 3 indicate that torula yeast has a higher percentage adsorption of rare earth ions than baker's yeast, and that rare earths can be efficiently recovered according to an embodiment of the present invention.

Furthermore, the results shown in Table 5 indicate that rare earth ions adsorbed onto torula yeast can be easily desorbed by treatment with hydrochloric acid.

### [Table 5]

**(Table 5)**

| | Metal ion | | | |
|---|---|---|---|---|
| | Y | La | Nd | Dy |
| Amount of metal ion adsorbed onto yeast in Example 2 (mg) | 12. 6 | 6.4 | 7. 8 | 2. 1 |
| Desorption amount of metal ion by 0.2 M HCl aqueous solution (mg) | 2.2 | 1.1 | 1.2 | 0.3 |
| Desorption amount of metal ion by concentrated hydrochloric acid (mg) | 6.1 | 3.4 | 4. 7 | 1.0 |
| Total desorption amount of metal ion (mg) | 8.3 | 4.5 | 5.9 | 1.3 |
| Percentage desorption of metal ion (%) | 66 | 70 | 76 | 62 |

### (Chemical leaching treatment of rare earth mud actual liquid)

Chemical leaching treatment was carried out using actual rare earth mud as follows.

The rare earth mud, which had not undergone any pretreatment such as decomposition with strong acids or evaporation to dryness, was used.

This rare earth mud was mixed with a 0.5 M hydrochloric acid (HCl aqueous solution) to adjust the concentration of the rare earth mud to 40 w/v%, and then stirred with a stirring blade at room temperature for 60 minutes.

After that, centrifugation was performed, followed by filtration of the liquid phase through a filter with a pore size of 0.2 µm.

The metal components in the resulting liquid (leachate) were measured using ICP (Inductively Coupled Plasma) emission spectroscopy. The measurement results are shown in Table 6.

### [Table 6]

**(Table 6)**

| Composition of leachate (ppm) | | | | | | | | | | | | | | | | | | |
|---|---|---|---|---|---|---|---|---|---|---|---|---|---|---|---|---|---|---|
| Al | Cu | Fe | Sc | Y | La | Ce | Pr | Nd | Sm | Eu | Gd | Tb | Dy | Ho | Er | Tm | Yb | Lu |
| 489 | 6.8 | 18.7 | 0.7 | 29.9 | 14.7 | 1.9 | 4.7 | 14.7 | 5.4 | 1.3 | 5.2 | 0.8 | 5.0 | 1.0 | 2.8 | 0.6 | 2. 1 | 0.3 |

### (Example 8)

After chemical leaching treatment of the actual rare earth mud solution (leaching time: 60 minutes) as described above, centrifugation was performed (10 minutes), followed by filtration of the liquid phase through a filter with a pore size of 0.2 µm, and the pH of the liquid phase (leachate) after filtration was adjusted. At that time, a 50 wt% NaOH aqueous solution was used as a pH adjuster to adjust the initial pH of the leachate to pH 1.0, and it was left to stand overnight.

With 5 ml of the leachate with an initial pH of 1.0, 80 mg of commercially available torula yeast (manufactured by Kohjin Life Sciences Co., Ltd., product name: KR yeast) was mixed (dry yeast content: 16 g/L), and the mixture was shaken and stirred for 30 minutes in an incubator (34°C) (adsorption step), followed by filtration through a filter with a pore size of 0.2 µm. The pH of the filtrate (liquid phase) was 1.0.

The metal ion concentration in the obtained filtrate (liquid phase) was measured using ICP (Inductively Coupled Plasma) emission spectroscopy. The results are shown in Table 7. The numerical values in parentheses in the table indicate percentage adsorption.

The percentage adsorption of each metal ion was calculated according to the following formula. Percentage adsorption (%) = (metal ion concentration in the leachate before addition of yeast - metal ion concentration in the filtrate) / metal ion concentration in the leachate before addition of yeast × 100

### (Example 9)

Metal ion adsorption treatment (adsorption step) was carried out in the same manner as in Example 8, except that the leachate adjusted to pH 1.0 was replaced with a leachate adjusted to pH 2.0, and the metal ion concentration in the filtrate (liquid phase) was measured. The results are shown in Table 7.

### (Comparative Examples 3 to 5)

Metal ion adsorption treatment (adsorption step) was carried out in the same manner as in Example 8, except that the torula yeast was replaced with baker's yeast (Comparative Example 3), salt-tolerant yeast 1 (Comparative Example 4: C. krusei (normal culture)), and salt-tolerant yeast 2 (Comparative Example 5: C. krusei (high salt culture)), respectively, and the metal ion concentration in the filtrate (liquid phase) was measured. The results are shown in Table 7.

In addition, the high-salt culture was performed by adding NaCl to normal medium (NaCl concentration 10%).

### (Comparative Examples 6 to 8)

Metal ion adsorption treatment (adsorption step) was carried out in the same manner as in Example 9, except that the torula yeast was replaced with baker's yeast (Comparative Example 6 ), salt-tolerant yeast 1 (Comparative Example 7 : C. krusei (normal culture)), or salt-tolerant yeast 2 (Comparative Example 8: C. krusei (high-salt culture)), and the metal ion concentration in the filtrate (liquid phase) was measured. The results are shown in Table 7.

### [Table 7]

**(Table 7)**

| | pH of leachate | pH of liquid phase after adsorption treatment | Type of yeast | Amount of yeast in adsorption step (g/L) | Composition of liquid phase after adsorption step (ppm) | | | | | | | |
|---|---|---|---|---|---|---|---|---|---|---|---|---|
| | | | | | Al | Cu | Fe | Y | Ce | La | Nd | Dy |
| Example 8 | 1.0 | 1.0 | torula yeast | 16 | 471 (3%) | 6. 7 (1%) | 4.8 (75%) | 16.5 (44%) | 0.8 (56%) | 8.0 (45%) | 6. 6 (48%) | 2.2 (55%) |
| Comparative Example 3 | 1.0 | 1.0 | baker's yeast | 16 | 487 (0%) | 6.8 (0%) | 14. 3 (27%) | 28.4 (4%) | 1.8 (0%) | 14. 2 (3%) | 14.1 (3%) | 4.3 (12%) |
| Comparative Example 4 | 1.0 | 1.1 | salt-tolerant yeast 1 | 16 | 486 (0.2%) | 6.7 (1%) | 15. 3 (22%) | 27.9 (6%) | 1.9 (0%) | 14. 4 (1%) | 14.0 (4%) | 4.5 (8%) |
| Comparative Example 5 | 1.0 | 1.1 | salt-tolerant yeast 2 | 16 | 477 (2%) | 6.7 (1%) | 9.7 (50%) | 26.4 (11%) | 1. 8 (0%) | 14. 2 (3%) | 13.7 (7%) | 4.4 (10%) |
| Leachate (pH1. 0) | 1.0 | - | - | - | 487 | 6.8 | 19.5 | 29. 7 | 1.8 | 14. 6 | 14.6 | 4. 9 |
| Example 9 | 2.0 | 2.2 | torula yeast | 16 | 436 (10%) | 6.1 (5%) | 7. 5 (56%) | 14.0 (53%) | 0.8 (58%) | 6.9 (53%) | 5.6 (62%) | 2. 1 (57%) |
| Comparative Example 6 | 2.0 | 2.2 | baker's yeast | 16 | 473 (2%) | 5.8 (9%) | 16.9 (0%) | 28.3 (4%) | 1.8 (5%) | 14.5 (1%) | 14.4 (2%) | 4.8 (2%) |
| Comparative Example 7 | 2.0 | 2.5 | salt-tolerant yeast 1 | 16 | 355 (27%) | 3.1 (52%) | 6.8 (60%) | 20.0 (32%) | 1.2 (37%) | 10.8 (27%) | 9.4 (36%) | 3.3 (33%) |
| Comparative Example 8 | 2.0 | 2.6 | salt-tolerant yeast 2 | 16 | 423 (13%) | 3.8 (41 %) | 13.6 (20%) | 21.5 (27%) | 1.4 (26%) | 12.4 (16%) | 11.2 (24%) | 3.7 (24%) |
| Leachate (pH2.0) | 2.0 | - | - | - | 484 | 6.4 | 16.9 | 29.6 | 1.9 | 14.7 | 14.7 | 4.9 |

The results shown in Table 7 indicate that, according to an embodiment of the present invention, rare earths can be recovered from actual rare earth mud using torula yeast.

Furthermore, the results shown in Table 7 indicate that the percentage adsorption of rare earths onto torula yeast is higher than that of other yeasts, demonstrating that rare earths can be efficiently recovered according to an embodiment of the present invention.

### Reference Signs List

11 Mixing vessel
12 Agitator
13 Dissolved metal solution inlet
13b Dissolved metal solution feed control valve
14. Yeast feed port
15 pH adjuster inlet
15b pH adjuster feed control valve
16 Mixed liquid discharge part
16p Mixed liquid feed pump
21 Storage section
22 Air pump
23 Feeder
31 Solid-liquid separator
32 Residual liquid recycle line
32b Residual liquid control valve
41 Dryer
51 Heat treatment furnace
61 Dust collector
62. Collected powder conveyance line (belt conveyor)
63 Blower
64 Flare Stack
FIC: Flow indicator and controller
MCC: Motor control center
M: Motor

## Claims

1. A rare earth element recovery method comprising:
mixing a liquid containing a rare earth ion with torula yeast, thereby adsorbing the rare earth ion by the torula yeast under an acidic condition to obtain a mixed liquid;
separating the torula yeast from the mixed liquid obtained in the adsorbing; and
recovering the rare earth ion from the torula yeast separated in the separating.

2. The rare earth element recovery method according to claim 1, wherein a pH of the mixed liquid in the adsorbing is 1.0 or higher.

3. The rare earth element recovery method according to claim 1, wherein a pH of the mixed liquid in the adsorbing is 2.4 or lower.

4. The rare earth element recovery method according to claim 1, further comprising treating a solid material containing a rare earth element with an acidic solution, thereby leaching a rare earth ion to obtain an acidic liquid containing the rare earth ion,
wherein the adsorbing is carried out by mixing the acidic liquid obtained in the leaching with the torula yeast.

5. The rare earth element recovery method according to claim 4, wherein a pH of the acidic solution used in the leaching is 2.0 or lower.

6. The rare earth element recovery method according to claim 4, wherein the solid material containing a rare earth element is a mineral that contains a rare earth element.

7. The rare earth element recovery method according to claim 4, wherein the solid material containing a rare earth element is apatite, iron hydroxide, or manganese oxide that contain a rare earth element.

8. The rare earth element recovery method according to claim 4, wherein the solid material containing a rare earth element is rare earth mud.

9. The rare earth element recovery method according to claim 1, wherein the liquid before being mixed with the torula yeast further contains an ion of a metal other than rare earth elements.

10. The rare earth element recovery method according to claim 4,
wherein the solid material containing a rare earth element further contains a metal other than rare earth elements; and
the liquid before being mixed with the torula yeast further contains an ion of a metal other than rare earth elements.

11. The rare earth element recovery method according to claim 9 or 10, wherein the metal other than rare earth elements is at least one selected from the group consisting of vanadium, chromium, manganese, iron, cobalt, nickel, copper, zinc, magnesium, aluminum, calcium, and titanium.

12. The rare earth element recovery method according to claim 4, wherein a time for treatment with the acidic solution (leaching time) in the leaching is within one hour.

13. The rare earth element recovery method according to claim 1, wherein in the adsorbing, the liquid and the torula yeast are continuously fed into a mixing vessel, and the mixed liquid including the liquid and the torula yeast is continuously discharged from the mixing vessel.

14. The rare earth element recovery method according to claim 1,
wherein in the separating, the mixed liquid obtained in the adsorbing is subjected to a solid-liquid separation to obtain a separated solid fraction, and
in the recovering, the separated solid fraction obtained in the separating is subjected to an acid treatment to recover the rare earth ion adsorbed by the torula yeast.

15. The rare earth element recovery method according to claim 1,
wherein in the separating, the mixed liquid obtained in the adsorbing is subjected to a solid-liquid separation to obtain a separated solid fraction, and
in the recovering, the separated solid fraction obtained in the separating is subjected to a heat treatment to burn the torula yeast, thereby recovering the rare earth ion adsorbed by the torula yeast as a concentrate thereof.

16. The rare earth element recovery method according to claim 15, wherein in the recovering, the heat treatment of the separated solid fraction is carried out by burning it in an industrial furnace.

17. The rare earth element recovery method according to claim 15 or 16, comprising recovering powder from an exhaust gas of the heat treatment, and mixing the recovered powder with the separated solid fraction before the heat treatment.

18. The rare earth element recovery method according to claim 14 or 15, wherein the solid-liquid separation is carried out by at least one method selected from the group consisting of centrifugation, filtration, membrane separation, and sedimentation separation.

19. The rare earth element recovery method according to claim 14 or 15, further comprising drying the separated solid fraction to lower its water content.

20. The rare earth element recovery method according to claim 14 or 15, wherein a separated liquid fraction obtained by the solid-liquid separation in the separating is mixed with the liquid containing the rare earth ion before mixing with the torula yeast.
